# FASCICULE DE BREVET EUROPEEN

(11) **EP 1 541 650 B1**
(45) Date de publication et mention de la délivrance du brevet: **02.01.2008**
(21) Numéro de dépôt: 04292762.4
(22) Date de dépôt: 24.11.2004
(51) Int. Cl.: C09D 177/00, C09D 5/03, C08K 3/08, C08K 9/02

(54) **Poudre à base de polyamide et son utilisation pour obtenir un revêtement antibactérien**
Pulverzusammensetzungen auf Basis von Polyamid,ihre Verwendung zur Herstellung von antibakteriellen Beschichtungen
Polyamide-based powder and its use to provide an antibacterial coating

(30) Priorité: 05.12.2003 FR 0314305
(43) Date de publication de la demande: 15.06.2005
(73) Titulaire: ARKEMA FRANCE, 92700 Colombes (FR)
(72) Inventeur: Lapeyre, Adrien, 27000 Evreux (FR); Gancet, Christian, 64140 Lons (FR)
(74) Mandataire: Mouttet, Marie-Paule

(56) Documents cités:
- EP-A- 0 270 129
- US-B1- 6 432 416

## Description

### Domaine de l'invention

La présente invention concerne une poudre à base de polyamide et son utilisation pour revêtir des objets. Elle est utile dans les procédés de recouvrement d'un objet par un film provenant de la fusion d'une mince couche de poudre préalablement déposée sur l'objet. Plus précisément la poudre de l'invention est un mélange de polyamide et d'ions d'argent encapsulés dans une céramique soluble.

Il existe actuellement à l'échelle industrielle plusieurs procédé de recouvrement d'un objet par fusion d'une poudre.

Le premier procédé est le poudrage électrostatique, il consiste à charger la poudre d'électricité statique et à la mettre en contact avec l'objet à recouvrir relié à un potentiel zéro. Par exemple la poudre est injectée dans un pistolet électrostatique qui va charger la dite poudre par effet corona (aussi appelé effet couronne), par triboélectrification ou par combinaison des deux. La poudre ainsi chargée est projetée sur l'objet à recouvrir relié à un potentiel zéro. Selon une autre forme de poudrage électrostatique on trempe l'objet relié à un potentiel zéro dans un lit fluidisé de poudre chargée. A l'intérieur du lit fluidisé se trouve de la poudre dont on veut recouvrir l'objet. Cette poudre est sous la forme de particules solides de faible taille, par exemple entre 0,01 et 1 mm, de forme quelconque, qui sont en état de fluidisation à l'intérieur du lit en présence d'air ou de tout autre gaz. La poudre peut être chargée par des électrodes par effet corona ou par tout dispositif, disposé à l'intérieur et/ou à l'extérieur du lit fluidisé, pour la charger par effet triboélectrique. L'objet recouvert de poudre est ensuite placé dans un four à une température suffisante pour assurer un revêtement par fusion de la poudre provoquant la filmification. Par exemple pour une poudre de polyamide 11 il suffit de chauffer à 220°C.

Le deuxième procédé consiste à préchauffer l'objet à recouvrir à une température supérieure à la température de fusion de la poudre. Une fois chaud, l'objet est immédiatement immergé dans un lit fluidisé de la poudre, la poudre fond au contact de l'objet chaud et filmifie. Un recouvrement solide est ainsi assuré. Ce procédé est aussi appelé "procédé de trempage en lit fluidisé". On peut aussi en variante de ce dernier procédé effectuer une projection de la poudre sur l'objet chaud.

La peinture poudre de la présente invention est utile dans les deux procédés.

### L'art antérieur et le problème technique

L'invention se rapporte au domaine des revêtements hautes performances. Ceux-ci ont généralement pour but d'apporter à la surface protégée de nombreuses propriétés qu'elles soient d'aspect ou fonctionnelles (résistance à la corrosion, à l'abrasion, résistance chimique, thermique et UV, faible coefficient de friction...).

Les bactéries sont des êtres unicellulaires se reproduisant par division. Leur taille est de quelques microns. Il existe des milliers d'espèces de bactéries, dont environ 200 sont pathogènes pour l'homme. On distingue les bactéries Gram+, tel *Staphylococcus aureus,* et les bactéries Gram- telles *Escherichia coli, Pseudomonas aeruginosa* et *Legionella* sp.

Leur transmission peut se faire par l'air ou par le contact avec la surface des objets. La transmission intervient en particulier dans les lieux publics, les transports en commun et les hôpitaux (maladies nosocomiales). Une façon de lutter contre ces micro-organismes est de protéger les surfaces contre leur apparition ou leur développement. Ceci est généralement fait par l'utilisation de produits détergents. Cependant, l'expérience montre que les nettoyages répétés ne permettent pas d'éviter de nombreuses infections dans les hôpitaux. L'obtention de revêtements antibactériens devrait permettre de garder entre deux nettoyages les surfaces saines et donc de réduire au maximum les risques de contaminations.

L'incorporation de biocides organiques dans les revêtements permet d'obtenir des surfaces présentant une efficacité contre les bactéries du type Gram+ et Gram- (demande de brevet WO 97-46626). Dans la plupart des cas les biocides utilisés sont de nature organique. Leur stabilité thermique inférieure à 300°C ne leur permet pas de supporter les conditions de mise en oeuvre très sévères liées au polyamide. De plus, leur activité étant obtenue par migration du biocide à travers le polymère, celle ci décroît rapidement dans le temps.

Une nouvelle génération de biocides inorganiques a été introduite. Ces composés sont principalement des supports de type zéolithe, verre, céramique ou complexes de phosphate de zirconium échangés à l'argent. En présence d'humidité, il se crée un échange ionique qui permet la libération d'ions d'argent qui sont des biocides puissants. Leur introduction dans des polymères afin d'obtenir des revêtements poudres ayant des propriétés antibactériennes a été décrite dans l'art antérieur (brevet US 6 432 416 et demande de brevet JP 06025561 A). Ce type de biocide ne migre pas ce qui garantit à la surface des propriétés antibactériennes pendant toute la durée de vie du polymère. On sait pouvoir utiliser ces produits dans de multiples applications comme par exemple pour des grilles de réfrigérateur (demande de brevet WO 02-40180) ou des grilles servant à cuisiner (demande de brevet WO 00-51429).

Cependant, les ions d'argent étant très réactifs, ce type de biocide peut facilement interagir avec les polymères dans lesquels ils sont ajoutés ainsi qu'avec les additifs et charges éventuellement contenus dans ces polymères et causer des problèmes de coloration. Il est donc très important qu'ils soient parfaitement stabilisés. C'est la nature du support inorganique qui joue ce rôle. C'est elle qui protège l'espèce argent de l'action de la température ou des UV. Elle contrôle de plus la vitesse de libération des ions d'argent. Cette vitesse doit être suffisante pour assurer une activité antibactérienne efficace mais contrôlée afin d'éviter le relargage d'argent dans la matrice polymère et donc les interactions résultantes. Dans le cas des peintures poudres à base de polyamides, les températures de mise en oeuvre notamment lorsqu'elles sont appliquées par trempage rendent le choix du biocide très difficile. La plupart des composés inorganiques (zéolithes échangées à l'argent ou phosphates de zirconium échangés à l'argent par exemple) provoque des variations importantes et indésirables de la couleur de la surface. La demande de brevet WO 01-90259 décrit une composition de peinture poudre antibactérienne à base de PA11 et d'un composé mixte à base d'argent et de zinc ne présentant pas de problèmes de décoloration, le composé du zinc servant très probablement d'anode sacrificielle.

On a maintenant trouvé qu'il était beaucoup plus simple et plus efficace d'ajouter dans la poudre de polyamide des ions d'argent encapsulés dans une céramique soluble. Ces ions d'argent encapsulés dans une céramique soluble se présentent sous forme de poudre et il suffit de la mélanger à sec à la poudre de polyamide avant de faire le revêtement. De telles poudres sont décrites par exemple dans la demande de brevet JP 2001247726 A**.** On peut trouver ces poudres dans le commerce, vendues par la société Sanitized AG sous le nom Sanitized® BC A 21-41.

### Brève description de l'invention

La présente invention concerne l'utilisation d'une poudre pour revêtir des objets, cette poudre comprenant en poids 99,8 à 97% d'au moins un polyamide et 0,2 à 3% d'une céramique soluble dans laquelle sont encapsulés des ions d'argent.

Cette poudre peut être préparée par simple mélange à sec (dry blend) des constituants.

L'invention concerne aussi cette poudre. C'est à dire que l'invention concerne une poudre comprenant en poids 99,8 à 97% d'au moins un polyamide et 0,2 à 3% d'une céramique soluble dans laquelle sont encapsulés des ions d'argent.

La céramique protège les ions d'argent de la température durant l'application et l'utilisation du produit, des rayons UV ainsi que des autres composants présents dans la formulation. C'est la présence d'humidité à la surface du revêtement, nécessaire au développement des bactéries, qui provoque la libération d'ions d'argent et donc l'élimination des bactéries.

La présente invention concerne aussi un procédé de recouvrement d'un objet par un film provenant de la fusion d'une mince couche de poudre dans lequel :
(a) on dispose de la poudre précédente électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

La présente invention concerne aussi un procédé de recouvrement d'un objet par un film provenant de la fusion d'une mince couche de poudre dans lequel :
(a) on dispose de la poudre précédente en lit fluidisé,
(b) on chauffe l'objet à recouvrir à une température suffisante pour que la poudre fonde à son contact,
(c) on trempe l'objet dans le lit fluidisé un temps suffisant pour qu'il se recouvre de poudre,
(d) on retire l'objet du lit fluidisé. On utilise avantageusement ce procédé.

La présente invention concerne aussi un procédé de recouvrement d'un objet par un film provenant de la fusion d'une mince couche de poudre dans lequel :
(a) on dispose de la poudre précédente,
(b) on chauffe l'objet à recouvrir à une température suffisante pour que la poudre fonde à son contact,
(c) on projette la poudre sur l'objet pour qu'il se recouvre de poudre,

L'invention concerne aussi les objets ayant un revêtement antibactérien obtenu par l'utilisation des poudres précédentes.

L'invention décrite ci dessus possède de nombreux avantages. La composition de peinture poudre polyamide appliquée sur une surface métallique soit par poudrage électrostatique soit par trempage en lit fluidisé soit par projection à chaud lui confère des propriétés antibactériennes durables. Cette composition contient un biocide inorganique utilisant comme seule espèce métallique active les ions d'argent. Cette peinture poudre a l'avantage de pouvoir être appliquée à des températures supérieures à 300°C sans problèmes de colorations indésirables et sans l'intervention de composés du zinc. Les réactions secondaires causées par l'espèce argent sont donc évitées par le choix d'une encapsulation dans une céramique soluble qui protège efficacement les ions d'argent contre la température, les UV mais aussi les autres composés de la formulation.

Cette invention permet l'utilisation d'un biocide inorganique à base d'argent seul dans un revêtement poudre polyamide pouvant être appliqué à des températures supérieures à 300°C sans problèmes de colorations indésirables de la surface. Les ions d'argent étant l'espèce métallique qui présente la plus grande efficacité donc la MIC (minimum inhibition concentration) la plus faible, ils garantissent au revêtement une activité optimale durant toute la durée de vie du polymère. De plus cette composition permet de s'affranchir des interactions pouvant intervenir entre la chaîne polymère et les composés du zinc lorsque ceux-ci sont utilisés en mélange avec le polyamide.

### Description détaillée de l'invention

S'agissant de la céramique soluble dans laquelle sont encapsulés des ions d'argent, à titre d'exemple on peut citer les verres aux oxydes. Cette catégorie englobe les différentes substances chimiques fabriquées dans le cadre de la production de verres inorganiques. Le terme "verre" désigne ici une substance amorphe, minérale, transparente, translucide ou opaque, traditionnellement formée par fusion des apports de silice a l'aide d'un fondant, tel qu'un carbonate d'un metal alcalin, de l'oxyde de bore, etc., et avec un stabilisant. La masse obtenue est refroidie jusqu'a devenir rigide, sans cristallisation dans le cas du verre transparent ou séparée en phase liquide, avec cristallisation controlée dans le cas des vitroceramiques. Cette catégorie regroupe les diverses substances chimiques, autres que les sous-produits ou les impuretés, qui sont formées au cours de la production des différents verres, et parallelement incorporées dans une composition vitreuse. Tous les verres contiennent une ou plusieurs de ces substances, mais peu, sinon aucun, les contiennent toutes. Les constituants mentionnés ci-dessous sont principalement présents sous forme d'oxydes, mais certains peuvent également apparaître sous forme d'halogénures ou de chalcogénures, a des états d'oxydation multiples ou dans des composés plus complexes. D'autres oxydes ou composés chimiques peuvent également être présents en traces. Les oxydes des sept premiers elements cités representent plus de 95%, en poids, du verre produit: Aluminium*; Bore*; Calcium*; Magnesium*; Potassium*; Silicium*; Sodium*; Antimoine; Arsenic; Baryum; Bismuth; Cadmium; Carbone; Cerium; Cesium; Chrome; Cobalt; Cuivre; Germanium; Or; Holmium; Fer; Lanthane; Plomb; Lithium; Manganese; Molybdene; Neodyme; Nickel; Niobium; Azote; Phosphore; Praseodyme; Rubidium; Selenium; Argent; Strontium; Soufre; Tellure; Etain; Titane; Tungstene; Uranium; Vanadium; Zinc; Zirconium.

De telles céramiques solubles contenant des ions argent sont décrites dans la demande de brevet JP 2001247726 A. On peut trouver ces poudres dans le commerce, vendues par la société Sanitized AG sous le nom Sanitized® BC A 21-41 (CAS REGISTRY NUMBER: 65997-17-3 EINECS No. 266-046-0)

**S'agissant du polyamide** on entend par polyamide les produits de condensation :
- d'un ou plusieurs aminoacides, tels les acides aminocaproïques, amino-7-heptanoïque, amino-11-undécanoïque et amino-12-dodécanoïque d'un
ou plusieurs lactames tels que caprolactame, oenantholactame et lauryllactame;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ; ou des mélanges de plusieurs de ces monomères ce qui conduit à des copolyamides. On utilise avantageusement des polyamides aliphatiques.

Les polyamides aliphatiques peuvent être choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C₁₂).

On utilise avantageusement le PA 11 et le PA 12.

**S'agissant de la préparation de la poudre** elle peut être effectuée par simple mélange à sec (dry blend) des constituants. La poudre de polyamide a une granulométrie pouvant varier de 10 à 1000 µm. L'expression "mélange à sec" est utilisée par opposition à un mélange dans lequel le polymère thermoplastique est à l'état fondu. On peut utiliser les mélangeurs habituels des produits en poudre, par exemple le Henschel®. Le mélange se fait à température et pression normales. La durée de mélange doit être suffisante pour que le mélange soit homogène.

La proportion d'ions d'argent dans la céramique soluble peut être quelconque pourvu qu'il y ait suffisamment d'ions d'argent pour obtenir un effet antibactérien. Elle est avantageusement comprise entre 1 et 10% en poids et de préférence entre 3 et 6%.

Avantageusement cette poudre comprend en poids 99,5 à 99% d'au moins un polyamide et 0,5 à 1% d'une céramique soluble dans laquelle sont encapsulés des ions d'argent.

La concentration est de préférence de l'ordre de 0,6%. Elle peut être inférieure, mais dans ce cas on ne retrouve pas l'efficacité escomptée sur toutes les bactéries ciblées. La teneur en agent anti-microbien n'est pas nécessairement 0,6%. Elle a été choisie de façon à obtenir un compromis entre l'efficacité et le prix du produit. Elle a aussi été déterminée de façon à limiter au maximum les risques que pourrait avoir le relargage de la composition dans un environnement aquatique.

La poudre de l'invention peut comprendre aussi des additifs anti UV, des antioxydants, des colorants, des pigments, des ignifugeants, etc... Ces produits sont de préférence incorporés dans le polyamide avant qu'il soit réduit en poudre.

**S'agissant des objets qu'on veut revêtir** à titre d'exemple on peut citer les objets métalliques. A titre d'exemple de métaux on peut citer l'aluminium, les alliages d'aluminium, l'acier et ses alliages. Éventuellement un pré-traitement de surface est effectué sur l'objet avant de le recouvrir de poudre. Il s'agit des pré-traitements classiques utilisés dans l'industrie du revêtement : phosphatage, dégraissage, grenaillage. On peut aussi utiliser un primaire.

**L'invention concerne aussi cette poudre.** La composition de cette poudre, la nature et les proportions de ses constituants sont celles décrites ci dessus pour son utilisation.

**S'agissant des tests antibactériens** on applique cette composition sur des plaques d'acier préalablement dégraissées, grenaillées et revêtues d'un primaire d'adhérence. L'application peut se faire soit par projection électrostatique, soit par projection à chaud soit par trempage en lit fluidisé.

Les coordonnées colorimétriques des revêtements obtenus sont ensuite mesurées au moyen d'un spectrocolorimètre et comparées à celles du grade commercial correspondant (c'est-à-dire la poudre de polyamide avec ses additifs mais ne contenant pas l'antibactérien. Les résultats montrent peu ou pas d'évolution de couleur entre le grade commercial et le grade additivé, ce qui ne peut pas être obtenu (voir exemple) lorsque le support contenant l'argent est une zéolithe ou un phosphate de zirconium.

Les propriétés mécaniques et l'aptitude à différents vieillissements sont vérifiées. Les tests menés ne montrent aucune différence de propriétés autre que biologique entre le grade commercial et le grade additivé.

Les propriétés antibactérienne sont évaluées selon la norme JIS Z 2801-2000, modifiée de façon à rendre les manipulations plus aisées. Le protocole exact est décrit ci-dessous :

### a -Préparation de l'inoculum

La veille à 16h, ensemencer 200 ml de milieu de culture liquide (beef extract 1g, yeast extract 2g, peptone 5g, NaCl 5g, eau ultra pure 1l) à partir d'une souche d'*Escherichia coli* issue au minimum d'un 2^{e} repiquage en gélose inclinée. Le même protocole peut être appliqué pour les souches *Staphylococcus aureus* ou *Legionella pneumophila*). Pour ce faire, rincer le tube de gélose en pente avec 5ml de milieu de culture liquide, bien vortexer et vider le contenu du tube dans le flacon de 200 ml de milieu de culture stérile. Laisser ensuite l'inoculum dans un incubateur à température ambiante et sans agitation pendant la nuit. Programmer la mise en agitation et en température le lendemain matin à 5h. Le lendemain, laisser pousser sous incubateur agité à 37°C pendant environ 4 h afin de se trouver en phase exponentielle de croissance, le démarrage des essais s'effectuant donc vers 9h du matin.

### b- Préparation des plaques d'acier revêtues du polyamide antibactérien:

Laver les plaques à l'éthanol 70°, puis les laisser sécher sous la hotte et éviter tout contact de la surface nettoyée à tester avec du matériel non stérile.

### c- Inoculation

Coller les cellules Gene Frame (feuille de polyéthylène dont les bordures sont auto-collantes de façon à adhérer au support) sur les plaques d'acier revêtues du polyamide antibactérien à tester à raison de 2 cellules par plaques pour une meilleure reproductibilité de la manipulation. Diluer au 10^{e} la suspension bactérienne de départ (solution mère) dans de l'eau physiologique stérile et bien vortexer. Mettre 100 µl de la solution diluée au 10^{e} dans les cadres des cellules Gene Frame et refermer avec l'opercule. Mettre à incuber 24 heures dans l'étuve à 37°C.

### d- Comptage inoculum

Préparer 4 tubes aux dilutions 10⁻², 10⁻⁴, 10⁻⁶, 10⁻⁸ à partir de la solution mère diluée au 10^{e}. Conserver les tubes aux dilutions 10⁻², 10⁻⁴ au frais en cas de problèmes. Mettre les dilutions 10⁻⁶, 10⁻⁸ dans les plaquettes Total count millipore pour le comptage des colonies et mettre à incuber 24 heures dans l'étuve à 37°C.
Après 24h d'incubation des plaques de Rilsan, prélever la totalité de l'inoculum disponible dans les cellules Gene Frame et le transvaser dans un tube Eppendorf stérile. Pipeter 50µl de cette solution et la diluer dans 5 ml d'eau physiologique stérile (dilution 10⁻²). Procéder ensuite à une cascade de dilution (10⁻⁴,10⁻⁶) dans 10 ml d'eau physiologique stérile. Mettre les différentes dilutions (10⁻²,10⁻⁴, 10⁻⁶) dans les plaquettes total count millipore pour le comptage des colonies et mettre à incuber 24 heures dans l'étuve à 37°C.
Les résultats antibactériens obtenus sur *Escherichia coli, Staphylococcus aureus* et *Legionella pneumophila* montrent des réductions de la population bactérienne supérieures à 99,99 % sur les revêtements obtenus à partir des compositions réalisées selon la présente invention.

### Exemples

Les exemples suivants illustrent l'invention sans en limiter la portée.

### 1/ Evaluation de l'efficacité anti-bactérienne d'une composition telle que décrite dans cette invention.

On incorpore en dry-blend 0,6% de sanitized BC A 21-41 dans un RILSAN® commercial T gris 3362 (à base de PA 11) grâce à un mélangeur rapide henshel afin d'obtenir une composition A.

La composition poudre A obtenue ainsi que le grade commercial T gris 3362 MAC sont appliqués par trempage. Ce procédé consiste à dégraisser, grenailler une plaque en acier et la revêtir par pulvérisation pneumatique d'un primaire d'adhérence type époxy, puis à préchauffer celle-ci à une température de 300°C. L'éprouvette ainsi préparée est immergée dans une cuve contenant de la poudre devant être appliquée en fluidisation.

Le revêtement A et le revêtement sans additif sont d'aspect parfaitement similaire. Leurs propriétés antibactériennes sont évaluées selon le protocole décrit plus haut. Les résultats sont résumés dans le tableau ci-dessous :

| | ***E. coli*** | | | ***S. aureus*** | | | ***L. pneumophila*** | | |
|---|---|---|---|---|---|---|---|---|---|
| **Composition** | **t=0 (log de CFU/ml)** | **t=24 (log de CFU/ml)** | **Réduction en %** | **t=0 (log de CFU/ml)** | **t=24 (log de CFU/ml)** | **Réduction en %** | **t=0 (log de CFU/ml)** | **t=24 (log de CFU/ml)** | **Réduction en %** |
| T GRIS 3362 MAC | 7,7 | 7,9 | - | 7,5 | 7,1 | - | 6,7 | 6,3 | - |
| A | 8 | 2,7 | >99,999 | 7,3 | <2 | >99,999 | 6,7 | 2 | >99,998 |

Le revêtement obtenu à partir de la composition brevetée présente bien une efficacité permettant de réduire la population bactérienne de plus de 99,99 % sur les souches d' *E. coli, S. aureus* et *L. pneumophila.*

### 2/ Evaluation comparative des colorations induites par l'incorporation d'un agent anti microbien.

On réalise trois compositions B, C, D en incorporant en dry blend respectivement 0,6% de Sanitized BC A 21-41, 0,6 % de Agion AK10D (zéolithe échangée à l'argent), et 0,6 % d'ALPHASAN RC5000 (phosphate de zirconium échangé à l'argent) dans un grade ES blanc 840 (poudre de PA 11). Les compositions B, C et D et le grade commercial ES blanc 840 sont appliqués par procédé électrostatique. Ce procédé consiste à dégraisser, grenailler et revêtir une plaque en acier d'un primaire d'adhérence type époxy par pulvérisation pneumatique. La poudre devant être appliquée est chargée positivement dans un pistolet corona pour être projetée sur l'éprouvette préparée comme décrit ci-dessus et reliée à la masse. Les coordonnées colorimétriques (système CIE Lab 76 (L*, a*, b*), ILL D65, observateur 10°) sont mesurées à l'aide d'un spectrocolorimètre à sphère COLORQUEST HUNTERLAB. Les écarts colorimétriques par rapport au témoin sont regroupés dans le tableau ci-dessous.

| ***Composition*** | ***ΔE*, (ILL D 65, 10°)*** |
|---|---|
| ES blanc 840 | - |
| C (0,6% Agion AK 10 D) | 8,46 |
| B (0,6% SANITIZED) | 2,11 |
| D (0,6% RC 5000) | 11,69 |

Le revêtement correspondant à la composition B obtenu avec le produit de Sanitized AG (céramique contenant des ions argent) a une évolution colorimétrique très faible comparée aux produits obtenus à partir soit de la zéolithe échangée à l'argent soit à partir du phosphate de zirconium échangé à l'argent.

## Revendications

1. Utilisation d'une poudre pour revêtir des objets, cette poudre comprenant en poids 99,8 à 97% d'au moins un polyamide et 0,2 à 3% d'une céramique soluble dans laquelle sont encapsulés des ions d'argent.

2. Utilisation selon la revendication 1 dans laquelle le polyamide est choisi parmi le PA 11 et le PA 12.

3. Utilisation selon l'une quelconque des revendications précédentes dans laquelle la poudre comprend en poids 99,5 à 99% d'au moins un polyamide et 0,5 à 1% d'une céramique soluble dans laquelle sont encapsulés des ions d'argent.

4. Utilisation selon l'une quelconque des revendications précédentes dans laquelle la proportion d'ions d'argent dans la céramique est comprise entre 1 et 10% en poids.

5. Utilisation selon la revendication 4 dans laquelle la proportion d'ions d'argent dans la céramique est comprise entre 3 et 6% en poids.

6. Procédé de recouvrement d'un objet par un film provenant de la fusion d'une mince couche de poudre comprenant en poids 99,8 à 97% d'au moins un polyamide et 0,2 à 3% d'une céramique soluble dans laquelle sont encapsulés des ions d'argent dans lequel:
(a) on dispose de la poudre précédente électrisée, cette poudre ayant été chargée par tout moyen,
(b) on approche l'objet de la poudre ou bien on met en contact l'objet et la poudre, l'objet étant relié à un potentiel zéro ou suffisant pour le recouvrir de poudre,
(c) on place ensuite l'objet recouvert de la poudre dans un four à une température suffisante jusqu'à obtenir le film de revêtement par fusion de la poudre.

7. Procédé de recouvrement d'un objet par un film provenant de la fusion d'une mince couche de poudre comprenant en poids 99,8 à 97% d'au moins un polyamide et 0,2 à 3% d'une céramique soluble dans laquelle sont encapsulés des ions d'argent dans lequel :
(a) on dispose de la poudre précédente en lit fluidisé,
(b) on chauffe l'objet à recouvrir à une température suffisante pour que la poudre fonde à son contact,
(c) on trempe l'objet dans le lit fluidisé un temps suffisant pour qu'il se recouvre de poudre,
(d) on retire l'objet du lit fluidisé.

8. Procédé de recouvrement d'un objet par un film provenant de la fusion d'une mince couche de poudre comprenant en poids 99,8 à 97% d'au moins un polyamide et 0,2 à 3% d'une céramique soluble dans laquelle sont encapsulés des ions d'argent dans lequel :
(a) on dispose de la poudre précédente,
(b) on chauffe l'objet à recouvrir à une température suffisante pour que la poudre fonde à son contact,
(c) on projette la poudre sur l'objet pour qu'il se recouvre de poudre,

9. Poudre comprenant en poids 99,8 à 97% d'au moins un polyamide et 0,2 à 3% d'une céramique soluble dans laquelle sont encapsulés des ions d'argent.

10. Objet ayant un revêtement antibactérien de poudre selon la revendication 9.

## Claims

1. Use of a powder for coating articles, this powder comprising, by weight, 99.8 to 97% of at least one polyamide and 0.2 to 3% of a soluble ceramic in which silver ions are encapsulated.

2. Use according to Claim 1, in which the polyamide is chosen from PA-11 and PA-12.

3. Use according to either of the preceding claims, in which the powder comprises, by weight, 99.5 to 99% of at least one polyamide and 0.5 to 1% of a soluble ceramic in which silver ions are encapsulated.

4. Use according to any one of the preceding claims, in which the proportion of silver ions in the ceramic is between 1 and 10% by weight.

5. Use according to Claim 4, in which the proportion of silver ions in the ceramic is between 3 and 6% by weight.

6. Method of covering an article with a film formed from the melting of a thin layer of powder comprising, by weight, 99.8 to 97% of at least one polyamide and 0.2 to 3% of a soluble ceramic in which silver ions are encapsulated, in which method:
a) the above powder is used in electrified form, this powder having been charged by any means;
b) the article is brought towards the powder or else the article and the powder are brought into contact with each other, the article being connected to zero potential or a potential sufficient to cover it with powder; and
c) the powder-covered article is then placed in an oven at a temperature high enough to obtain the coating film by the polymer melting.

7. Method of covering an article with a film formed from the melting of a thin layer of powder comprising, by weight, 99.8 to 97% of at least one polyamide and 0.2 to 3% of a soluble ceramic in which silver ions are encapsulated, in which method:
a) the above powder is used in fluidized bed form;
b)the article to be covered is heated to a temperature high enough for the powder to melt on contact with it;
c) the article is dipped into the fluidized bed for a time long enough for it to be covered with powder; and
d)the article is withdrawn from the fluidized bed.

8. Method of covering an article with a film formed from the melting of a thin layer of powder comprising, by weight, 99.8 to 97% of at least one polyamide and 0.2 to 3% of a soluble ceramic in which silver ions are encapsulated, in which method:
a) the above powder is used;
b)the article to be covered is heated to a temperature high enough for the powder to melt on contact with it; and
c)the powder is sprayed onto the article so that it is covered with powder.

9. Powder comprising, by weight, 99.8 to 97% of at least one polyamide and 0.2 to 3% of a soluble ceramic in which silver ions are encapsulated

10. Article having an antibacterial coating of a powder according to Claim 9.

## Patentansprüche

1. Verwendung eines Pulvers zum Beschichten von Gegenständen, wobei das Pulver 99,8 bis 97 Gew.-% mindestens eines Polyamids sowie 0,2 bis 3 % eines löslichen keramischen Werkstoffs, innerhalb dessen Silberionen verkapselt sind, umfasst.

2. Verwendung nach Anspruch 1, wobei das Polyamid aus PA 11 und PA 12 gewählt ist.

3. Verwendung nach einem beliebigen der vorhergehenden Ansprüche, wobei das Pulver 99,5 bis 99 Gew.-% mindestens eines Polyamids sowie 0,5 bis 1 % eines löslichen keramischen Werkstoffs, innerhalb dessen Silberionen verkapselt sind, umfasst.

4. Verwendung nach einem beliebigen der vorhergehenden Ansprüche, wobei der Anteil der Silberionen in dem keramischen Werkstoff zwischen 1 und 10 Gew.-% liegt.

5. Verwendung nach Anspruch 4, wobei der Anteil der Silberionen in dem keramischen Werkstoff zwischen 3 und 6 Gew.-% liegt.

6. Verfahren zum Bedecken eines Gegenstandes mit einem Überzug, welcher sich durch Schmelzen einer dünnen Schicht bildet, die aus einem Pulver besteht, welches 99,8 bis 97 Gew.-% mindestens eines Polyamids sowie 0,2 bis 3 % eines löslichen keramischen Werkstoffs, innerhalb dessen Silberionen verkapselt sind, umfasst, wobei:
(a) das vorstehend genannte Pulver in elektrisch geladenem Zustand bereitgestellt wird, wobei die Aufladung durch ein beliebiges Mittel erfolgt ist,
(b) der Gegenstand an das Pulver herangeführt oder der Gegenstand und das Pulver in Kontakt gebracht werden, wobei der Gegenstand an ein Potential angeschlossen ist, das gleich null ist oder ausreicht, um ihn mit Pulver zu bedecken,
(c) der Gegenstand, der mit dem Pulver bedeckt ist, anschließend in einen Ofen mit einer ausreichenden Temperatur gegeben wird und dort verbleibt, bis durch Schmelzen des Pulvers der Beschichtungsüberzug erhalten wird.

7. Verfahren zum Bedecken eines Gegenstandes mit einem Überzug, welcher sich durch Schmelzen einer dünnen Schicht bildet, die aus einem Pulver besteht, welches 99,8 bis 97 Gew.-% mindestens eines Polyamids sowie 0,2 bis 3 % eines löslichen keramischen Werkstoffs, innerhalb dessen Silberionen verkapselt sind, umfasst, wobei:
(a) das vorstehend genannte Pulver als Wirbelschicht bereitgestellt wird,
(b) der zu bedeckende Gegenstand auf eine Temperatur erhitzt wird, die dafür ausreicht, dass das Pulver beim Kontakt mit demselben schmilzt,
(c) der Gegenstand für eine Zeitdauer, die dafür ausreicht, dass er von dem Pulver bedeckt wird, in die Wirbelschicht getaucht wird,
(d) der Gegenstand aus der Wirbelschicht entfernt wird.

8. Verfahren zum Bedecken eines Gegenstandes mit einem Überzug, welcher sich durch Schmelzen einer dünnen Schicht bildet, die aus einem Pulver besteht, welches 99,8 bis 97 Gew.-% mindestens eines Polyamids sowie 0,2 bis 3 % eines löslichen keramischen Werkstoffs, innerhalb dessen Silberionen verkapselt sind, umfasst, wobei:
(a) das vorstehend genannte Pulver bereitgestellt wird,
(b) der zu bedeckende Gegenstand auf eine Temperatur erhitzt wird, die dafür ausreicht, dass das Pulver beim Kontakt mit demselben schmilzt,
(c) der Gegenstand mit dem Pulver bespritzt wird, damit dieser von dem Pulver bedeckt wird.

9. Pulver, welches 99,8 bis 97 Gew.-% mindestens eines Polyamids sowie 0,2 bis 3 % eines löslichen keramischen Werkstoffs, innerhalb dessen Silberionen verkapselt sind, umfasst.

10. Gegenstand, der eine antibakterielle Beschichtung aufweist, welche aus Pulver nach Anspruch 9 besteht.
